(19) Europäisches Patentamt

European Patent Office

Office européen des brevets

(11) Veröffentlichungsnummer: **0 313 678 B1**

# (12) EUROPÄISCHE PATENTSCHRIFT

(45) Veröffentlichungstag der Patentschrift: **17.06.92**

(51) Int. Cl.⁵: **G01M  3/32**

(21) Anmeldenummer: **87115839.0**

(22) Anmeldetag: **28.10.87**

Teilanmeldung 91104023.6 eingereicht am 28/10/87.

(54) Verfahren und Anordnung zur Dichteprüfung eines Hohlkörpers sowie Verwendung des Verfahrens.

(43) Veröffentlichungstag der Anmeldung:
**03.05.89 Patentblatt  89/18**

(45) Bekanntmachung des Hinweises auf die
Patenterteilung:
**17.06.92 Patentblatt  92/25**

(84) Benannte Vertragsstaaten:
**AT BE CH DE ES FR GB GR IT LI LU NL SE**

(56) Entgegenhaltungen:
**EP-A- 0 060 548**
**EP-A- 0 238 861**
**DE-A- 1 473 363**

(73) Patentinhaber: **Lehmann, Martin**
**Obere Farnbühlstrasse 1**
**5610 Wohlen 1(CH)**

(72) Erfinder: **Lehmann, Martin**
**Obere Farnbühlstrasse 1**
**5610 Wohlen 1(CH)**

(74) Vertreter: **Troesch, Jacques J., Dr. sc. nat. et al**
**Troesch Scheidegger Werner AG Siewerdt-strasse 95**
**CH-8050 Zürich(CH)**

EP 0 313 678 B1

**Beschreibung**

Die vorliegende Erfindung betrifft Verfahren und Anordnungen zur Dichteprüfung eines Hohlkorpers und Verwendung ou der Verfahren bzw. der Anordnungen für flexible Hohlkörper, wie Kaffee-Verpackungen oder für mindestens teilweise gefüllte Hohlkörper.

Bei der Verpackung gewisser Lebensmittel, wie von Süssstoffen, Kaffee, aber auch von Medikamenten, z.B. in Form von Brausetabletten, ist es wesentlich, dass Verpackungsbehältnisse gegen die Umgebung dicht sind, so beispielsweise, um eine Kontamination durch Luftfeuchtigkeit des abgepackten Gutes zu verhindern. Dabei werden teilweise Behältnisse, wie Dosen, Beutel etc., generell formfeste oder flexible Hohlkörper, eingesetzt, die mit einer Deckel- oder Verschlusspartie versehen sind, welch letztere geöffnet werden kann, jedoch im verschlossenen Zustand den Hohlkörperinnenraum dichtend verschliessen sollte.

Bei der Herstellung derartiger Behältnisse werden verschiedene Verfahren eingesetzt, wie z.B. Schweissverfahren. Die Dichtheit derartiger Hohlkörper ist, auch bei formfesten Behältnissen, insbesondere im Bereiche von Verbindungsstellen, ein wesentliches Kriterium für ihre Gebrauchstüchtigkeit.

Mit den erfindungsgemäss vorgeschlagenen Verfahren bzw. Anordnungen ist es auf einfache Art und Weise möglich, mit grosser Zuverlässigkeit Hohlkörper auf ihre Dichte hin zu prüfen.

Es wird ausgenützt, dass, wenn ein allenfalls und bevorzugterweise gefüllter Hohlkörper in eine Prüfkammer eingeführt wird und in der Prüfkammer bezüglich des Hohlkörperinnendruckes ein positiver oder negativer Differenzdruck eines Prüfgases, vorzugsweise Luft, angelegt wird, sich nach Massgabe der Dichte bzw. Leckage am Hohlkörper ein Druckausgleich zwischen Prüfkammerndruck und Innendruck des Hohlkörpers ergibt, dessen Zeitverhalten ein Mass für die Grösse einer allenfalls vorliegenden Leckage ist.

Die Erfindung wird anschliessend beispielsweise anhand von Figuren erläutert.

Es zeigen:

Fig. 1 anhand eines Funktionsblockdiagrammes den prinzipiellen Aufbau einer Dichteprüf-Anordnung,

Fig. 2a den qualitativen Verlauf von Hohlkörperinnendruck und Prüfkammerninnendruck über der Zeit, bei nach dem Hohlkörperinnern gerichtetem Differenzdruck zwischen Prüfkammer und Hohlkörperinnendruck, bei völlig starren und dichten Hohlkörperwänden einerseits und bei wohl dichten, aber unter der Druckbelastung nachgebenden Hohlkörperwandungen,

Fig. 2b qualitativ eine Darstellung gemäss Fig. 2a bei unterschiedlichen Leckagen des Hohlkörpers,

Fig. 3 ausgehend von der Darstellung gemäss Fig. 1 eine erste erfindungsgemässe Ausführungsvariante, bei der auf konstanten Prüfkammerndruck geregelt wird und die Stellgrösse ausgewertet wird,

Fig. 4 ausgehend von der Darstellung gemäss Fig.1 eine zweite erfindungsgemäss Ausführungsvariante der Druckregistrierung als Differenzdruckmessung,

Fig. 5 ausgehend von der Darstellung gemäss Fig. 4 eine bevorzugte Realisationsform der Druckbeaufschlagungsanordnung für die Prüfkammer sowie mit einer Zeitsteueranordnung zur Zeitsteuerung der einzelnen Verfahrensphasen.

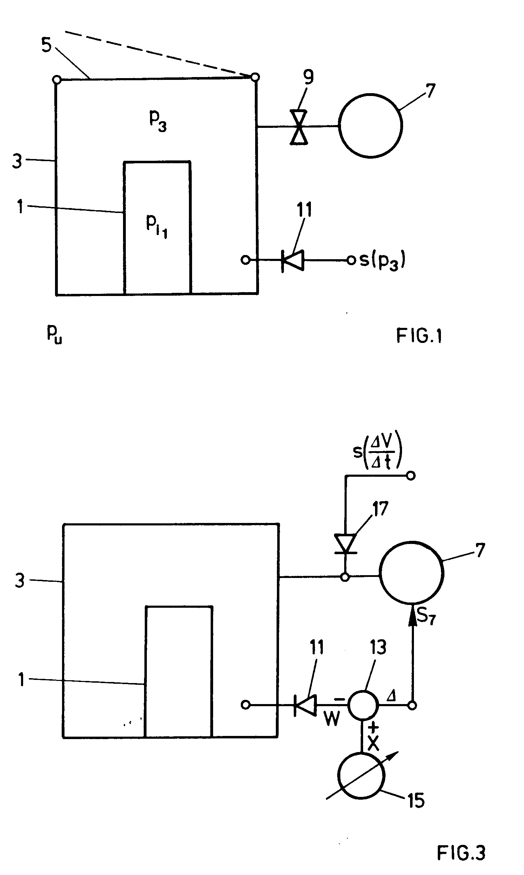

In Fig. 1 ist anhand eines schematischen Blockdiagramms eine prinzipielle Ausführungsvariante eines Dichteprüf-Verfahrens dargestellt bzw. einer Anordnung zu dessen Ausführung. Ein Hohlkörper 1 soll auf Dichtheit, Leckage, geprüft werden. Der Hohlkörper 1 wird in eine Prüfkammer 3 eingebracht, beispielsweise durch eine mittels eines Deckels 5 dicht verschliessbare Einführöffnung. Dabei herrscht im Innern des Hohlkörpers 1 ein Innendruck $p_{i1}$, der üblicherweise dem Umgebungsdruck $p_u$ entspricht. Nach hermetischem Verschliessen der Prüfkammer 3 wird die Prüfkammer 3 unter Druck gesetzt, indem eine Druckmediumsquelle 7 der Prüfkammer 3 aufgeschaltet wird. Als Druckmedium wird ein Gas, vorzugsweise Luft, eingesetzt. Dadurch wird in der Prüfkammer 3, mit Bezug auf den Innendruck $p_{il}$ innerhalb des Hohlkörpers 1, ein positiver oder negativer Differenzdruck erzeugt.

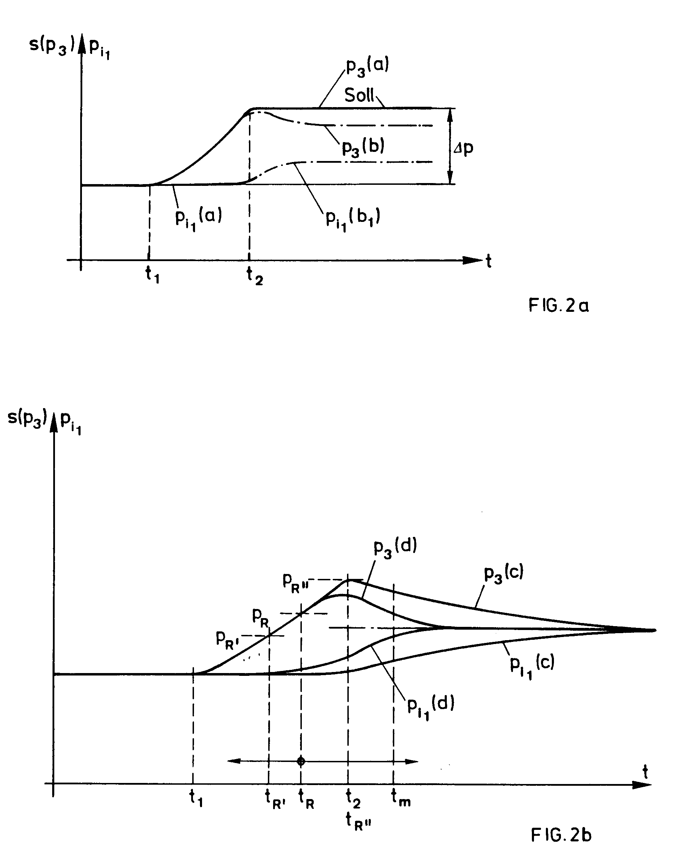

Der Druck innerhalb der Prüfkammer 3 ist in Fig. 1 mit $p_3$ bezeichnet. Daraufhin wird das Drucksystem, bestehend aus Prüfkammer 3 und zu prüfendem Hohlkörper 1 von der Druckmediumsquelle 7, wie mit einem Absperrventil 9 abgetrennt und sich selber überlassen. Ist der Hohlkörper 1 bezüglich des verwendeten Gases dicht und seine Wandungen derart starr, dass die aus der Druckdifferenz zwischen $p_3$ und $p_{i1}$ resultierenden Kräfte auf die Wandungen keine merklichen Deformationen bewirken, so wird mit einem, wie in Fig. 1 schematisch bei 11 dargestelltem Drucksensor, beispielsweise als mechanisch/elektrischer Wandler, wie als Piezo-Drucksensor ausgebildet, ein Ausgangssignal $s(p_3)$, wie in Fig. 2a qualitativ dargestellt, registriert.

In Fig. 2 ist qualitativ über der Zeit t der Druck in der Prüfkammer 3 entsprechend dem Signal s-($p_3$) sowie der Innendruck $p_{i1}$ im Hohlkörper 1 aufgetragen. Bis zum Zeitpunkt $t_1$, bis wohin der Hohlkörper 1 in die Prüfkammer 3 eingeführt worden ist und letztere mit dem Deckel 5 dichtend verschlossen wurde, sind $p_3$ und $p_{il}$ gleich dem Umgebungsdruck $p_u$. Im Zeitpunkt $t_1$ wird begonnen, die Prüfkammer 3 mit der Quelle 7 unter Druck zu setzen, der Druck in der Prüfkammer 3 steigt. Im oben erwähnten Fall starrer und dichter Hohlkörperwandungen bleibt der Innendruck $p_{il}$ von der Druckänderung in der Prüfkammer 3 unbeeinträchtigt. Wird im Zeitpunkt $t_2$ die Quelle 7 von der Prüfkammer 3 abgetrennt, so bleibt dann der Prüfkammerndruck $p_3(a)$ mindestens nahezu konstant und ebenso der Innendruck $p_{i1}(a)$ im Hohlkörper 1.

Sind die Wände des Hohlkörpers 1 nicht im oben erwähnten Sinne absolut starr, sondern biegen sich mindestens an gewissen Stellen und nach Massgabe der angelegten Druckdifferenz $\Delta p$ und deren Vorzeichen nach innen oder aussen, so ergeben sich bei nach dem Hohlkörperinnern gerichtetem Differenzdruck die strichpunktiert eingetragenen, qualitativen Verläufe $p_3(b)$ bzw. $p_{i1}(b)$. Analoge Verhältnisse ergeben sich bei nach der Prüfkammer 3 gerichtetem Differenzdruck.

Wie aus diesen qualitativen Verläufen ersichtlich, streben beide Drücke nach kürzerer oder längerer Zeit asymptotisch einem unterschiedlichen, konstanten Grenzwert zu.

In Fig. 2b sind in analoger Darstellung zu Fig. 2a die Verhältnisse bei vorliegenden, unterschiedlich grossen Leckagen am Hohlkörper 1 dargestellt. Bei einer relativ kleinen Leckage gleichen sich Innendruck des Hohlkörpers 1 und Druck zwischen Prüfkammer 3 und Hohlkörper 1 gemäss den qualitativen Verläufen $p(c)$ relativ langsam aus, bei grösseren Leckagen zunehmend schneller, wie beispielsweise mit den Verläufen $p(d)$ dargestellt. Ist generell für intakte dichte Hohlkörper 1 und unter Berücksichtigung einer allfälligen Volumenveränderung des Hohlkörpers 1 durch die Differenzdruckbeanspruchung ein SOLL-Verlauf $p_3$ z.B gemäss $p_3(b)$ bekannt, so wird ausgangsseitig des Sensors 11 durch Vergleich des IST-Verlaufs mit einem derartigen SOLL-Verlauf beurteilt, wie weit ein geprüfter Hohlkörper dicht ist oder nicht bzw. als Ausschuss zu werten ist oder nicht.

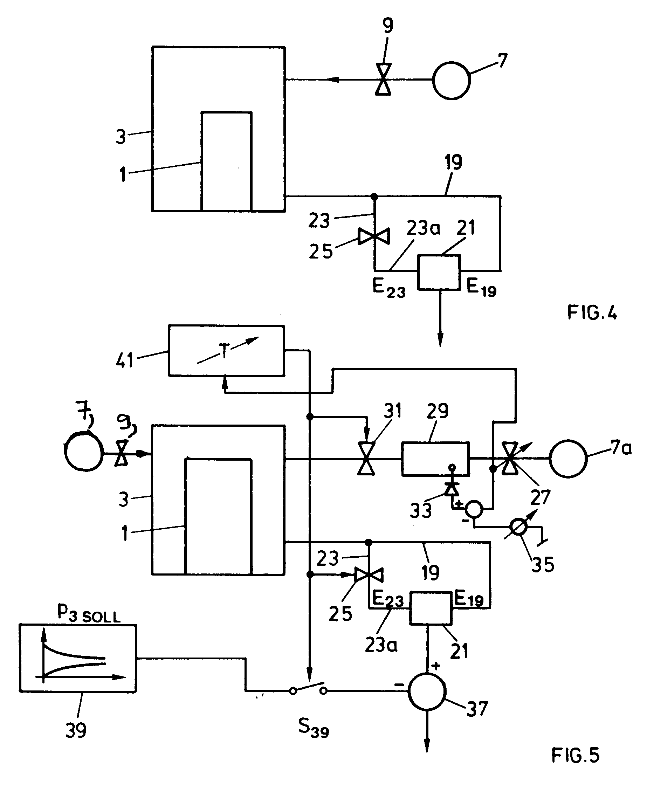

Gemäss Fig. 1 wird hierzu der Druck $p_3$, beispielsweise mit Bezug auf die Umgebungsatmosphäre mit Druck $p_u$ gemessen. Es wird, wie im weiteren noch zu beschreiben sein wird, in einer Ausführungsform eine erfindungsgemässe Differenzdruckmessung des Druckes $p_3$ bezüglich eines vorgegebenen Referenzdruckes vorgenommen. Vorerst wird aber in Fig. 3 eine weitere erfindungsgemässe Variante dargestellt, bei der der Druck in der Prüfkammer 3 konstant geregelt wird und der Prüfkammer 3 hierzu zu- bzw. abgeführte Druckmediumsmenge bzw. Gasmenge pro Zeiteinheit oder integriert über eine vorgegebene Zeitspanne, als Messgrösse erfasst wird.

Gemäss Fig. 3 wird nach Einbringen des zu prüfenden Hohlkörpers 1 in die dann dicht geschlossene Prüfkammer 3, letztere mittels einer Mediumsquelle 7 unter Druck gesetzt, wie mit Luft oder wiederum evakuiert, und der Innendruck der Prüfkammer 3 als Regelgrösse W mit einem Drucksensor 11 erfasst. Die Regelgrösse W wird an einer Differenzeinheit 13 mit einem Referenzdruck X oder einem referenzdruckentsprechenden Signal verglichen, und die resultierende Regeldifferenz $\Delta$ wird einem Steuereingang $S_7$ der Quelle 7 aufgeschaltet. Mit letzterer als Stellglied wird der Druck in der Prüfkammer 3 auf den an einer Vorgabeeinheit 15 eingestellten SOLL-Wert X oder SOLL-Wert-Verlauf gestellt. Das durch die Quelle 7 als Stellglied der Prüfkammer 3 zuzuführende Mediumsvolumen pro Zeiteinheit wird an einem Durchflussfühler 17 erfasst, als Signal $s(\frac{\Delta V}{\Delta t})$, das zur weiteren Auswertung, beispielsweise über eine vorgegebene Zeitspanne, integriert wird.

Es ergeben sich zu den in Fig. 2 gezeigten Verläufen analoge Verläufe des Signals $s(\frac{\Delta V}{\Delta t})$.

In Fig. 4 ist eine weitere erfindungsgemässe Ausführungsvariante der Druckmessung gemäss Fig. 1 an der Prüfkammer 3 dargestellt. Während der Druckaufbauphase zwischen den Zeitpunkten $t_1$ und $t_2$ wird die Prüfkammer 3 über eine Leitung 19 mit dem einen Eingang $E_{19}$ eines Differenzdrucksensors 21, wie eines piezo-elektrischen Sensors, verbunden. Ueber eine zweite Leitung 23, mit einem Absperrventil 25, ist die Prüfkammer 3 weiter mit dem zweiten Eingang $E_{23}$ des Differenzdrucksensors 21 verbunden. Im Zeitpunkt $t_R$ gemäss den Fig.2, wird das Absperrventil 25 geschlossen, so dass im Leitungsstück $23_a$, als Referenzdrucksystem, zwischen Absperrventil 25 und Eingang $E_{23}$, der dann in der Prüfkammer 3 herrschende Druck aufgebaut bleibt. Dieser Druck in der Verbindung $23_a$ wirkt als Referenzdruck auf den Differenzdrucksensor 21 und da die Leitung 19 in der nachfolgenden Messphase für $t > t_2$ offenbleibt, ergibt sich eine Differenzdruckmessung am Differenzdrucksensor 21 mit Bezug auf den Prüfkammerndruck im Zeitpunkt $t_R$. Wie aus Betrachtung von Fig. 2 ersichtlich, wird der Zeitpunkt $t_R$ fallspezifisch für optimale Messauflösung eingestellt, wie mit $t_{R'}$, $t_{R''}$ und den resultierenden Referenzdrücken $p_R$, $P_{R'}$, $P_{R''}$ dargestellt.

In Fig. 5 ist, ausgehend von der Darstellung von Fig. 4, eine bevorzugte Ausführungsvariante zur Druckbeaufschlagung der Prüfkammer 3 dargestellt. Hierzu ist eine Prüfgasquelle, wie eine Pumpe $7_a$ über ein Absperrventil 27 mit einem Referenzvolumen in einer Referenzkammer 29 verbunden. Letztere ist über ein weiteres Absperrventil 31 mit der Prüfkammer 3 verbunden. Mit der Quelle $7_a$ wird bei vorerst geöffnetem Ventil 27 und gesperrtem Ventil 31 die Referenzkammer 29 mit Prüfgas gefüllt und darin mittels eines Drucksensors 33 der Druck gemessen. Erreicht der mit dem Sensor 33 gemessene Druck einen an einer Referenzsignalquelle 35 eingestellten Referenzdruck, so wird das Ventil 27 gesperrt. Nun wird anschliessend das Ventil 31 geöffnet, womit die Kammern 3 und 29 ein kommunizierendes System bilden und sich nach Massgabe der Volumina in Kammer 29 und in Kammer 3 ein Prüfgasausgleich einstellt. Nach einer Ausgleichsphase, entsprechend dem Zeitabschnitt $t_2$, $t_1$ von Fig. 2 wird, wie anhand von Fig. 4 beschrieben wurde, mit dem Differenzdrucksensor 21 der Verlauf des Differenzdruckes gemessen oder zu einem vorgegebenen Messzeitpunkt $t_m$ gemäss Fig. 2b Unterschiede zwischen einer SOLL-Druckdifferenz und einer IST-Druckdifferenz registriert.

Wie in Fig. 5 weiter dargestellt, wird der Ausgang des Differenzdrucksensors 21 hierzu beispielsweise einer Differenzeinheit 37 zugeführt, welcher, an einem zweiten Eingang,eine, in einer schematisch bei 39 dargestellten Speicher- und Ausgabevorrichtung, wie eines Rechners, eingegebene Normkurve zugeführt wird, so dass am Ausgang der Differenzeinheit 37 die Abweichungen des momentanen Prüfresultates von einem vorgegebenen SOLL-Resultat ausgegeben werden und aufgrund dieser Abweichungen über Intaktheit bzw. Ausschuss des geprüften Hohlkörpers 1 entschieden werden kann. Selbstverständlich kann, wie bereits erwähnt, anstelle des Vergleichs der zeitlichen Verläufe, in einem vorgegebenen Zeitpunkt entsprechend $t_m$ der IST-Differenzdruck am Ausgang des Druckdifferenzsensors 21 mit an der Einheit 39 abgespeicherten SOLL-Werten quasi punktuell verglichen werden. Eine schematisch bei 41 dargestellte Zeittakt-Steuereinheit wird dabei bei Erreichen eines vorgegebenen Druckes in der Referenzkammer 29 ausgelöst und steuert danach, gemäss eingegebenen Zeitspannen T, die Ventile 31, 25 sowie allenfalls die SOLL-Wertaufschaltung bei $S_{39}$ an.

Nach diesen Verfahren und mit den beschriebenen Anordnungen können Leckagen in einem ausserordentlich weiten Bereich zuverlässig und schnell erfasst werden.

In einer Ausführungsvariante wird somit der Druck in der Prüfkammer nach einem vorgegebenen Zeitverlauf vorzugsweise konstant geregelt und die hierzu eingesetzte Stellgrösse ausgewertet. Ist im zu prüfenden Hohlkörper ein Leck vorhanden, so muss zur Aufrechterhaltung eines konstanten Druckes in der Prüfkammer, letzterer als Stellgrösse eine bestimmte Druckmediumsmenge pro Zeiteinheit zugeführt oder von ihr abgeführt werden, die der Druckmediumsmenge pro Zeiteinheit entspricht, die von der Kammer ins Innere des Hohlkörpers abliesst oder umgekehrt. Diese nachgeführte oder, bei vom Hohlkörperinnern nach aussen gerichtetem Differenzdruck, von der Prüfkammer wegzuführende Druckmediumsmenge pro Zeiteinheit wird dabei vorzugsweise als Messgrösse ausgewertet.

Um die Prüfkammer mit einem vorgegebenen Druckwert zu beaufschlagen, praktisch als Anfangswert, und dann nach druckmässiger Isolierung von Kammer und Hohlkörper aus dem Druckverlauf auf die obgenannten Kriterien zu schliessen, kann eine weitere Kammer auf einen vorgegebenen Druck aufgeladen werden und dann diese weitere Kammer mit der Prüfkammer verbunden werden zur Erzeugung des Differenzdruckes. Der Druck in der Prüfkammer ergibt sich dann bei Verbinden der beiden Kammern, einerseits aus dem Ladedruck der weiteren Kammer und dem Volumenverhältnis der beiden Kammern. Dabei wird hinzu bevorzugterweise vorgeschlagen, zur Erhöhung des Messignals die Prüfkammer vorgängig mit einem positiven oder negativen Druck bezüglich Atmosphärendruck vorzuladen.

Um im weiteren für die Auswertung des Prüfkammerninnendruckes einen definierten Referenzdruck zu schaffen und die Auswertung dann aufgrund einer Differenzdruckmessung vorzunehmen, wird vor der Auswertung die Kammer mit einem Referenzdrucksystem und einem Referenzdrucksensor erfindungsgemäss verbunden, dann das Referenzdrucksystem von der Kammer abgetrennt und dessen Druck als Referenzdruck für die nachfolgende Auswertung des Kammerndruckes eingesetzt.

Dadurch, dass das Referenzdrucksystem vorerst mit der Kammer und dem Differenzdrucksensor verbunden ist, stellt sich in ihr der gleiche Druck wie in der Prüfkammer ein, bevor das Referenzdrucksystem von der Kammer abgetrennt wird, und es bleibt der dannzumal in der Prüfkammer vorherrschende Druckwert im Referenzdrucksystem gespeichert und dient bei der nachfolgenden Auswertung als Referenzdruck für eine Differenzdruckmessung.

Durch die Auswertung am Kammerndruck zu einem vorgegebenen Zeitpunkt, punktuell, wird eine äusserst einfache Auswertung möglich. In einem vorgegebenen Zeitpunkt wird überprüft, ob der IST-Kammerndruck einem, beispielsweise für dichte Hohlkörper vorgängig erfassten Soll-Kammerndruck entspricht. Wird der IST-Prüfkammerndruck zu zwei oder mehreren Zeitpunkten, oder gar in seinem kontinuierlichen Zeitverlauf mit SOLL-Druckwerten zu zwei oder mehreren Zeitpunkten oder mit einem SOLLDruck-Zeitverlauf verglichen, so ergibt sich insbesondere bei sehr kleinen Leckagen eine Erhöhung der Auswertungsauflösung, z.B. durch Integrierung des Vergleichsresultats bzw. der SOLL-IST-Differenz.

Vorzugsweise werden vorgegebene SOLLDruckwerte oder SOLL-Druckverläufe abgespeichert und bei der obgenannten Prüfung jeweils als Vergleichswert mit den dann registrierten IST-Werten verglichen, um z.B. auf einen Hohlkörperausschuss aufgrund einer zu grossen Leckage zu schliessen.

**Patentansprüche**

1. Verfahren zur Dichteprüfung, bei dem ein Hohlkörper (1) in einer Prüfkammer (3) einer Druckdifferenz unterworfen wird und mittels eines Differenzdrucksensors (21) zwischen einem Referenzdrucksystem (23a) und der Prüfkammer (3) gemessen und ausgewertet wird, wobei vorerst das Referenzdrucksystem (23a) mit der Prüfkammer (3) verbunden wird und dann, zum Festhalten eines momentanen Druckes als Referenzdruck von ihr abgetrennt wird, und wobei; beide Eingänge ($E_{23}$, $E_{19}$) des Differenzdrucksensors (21) über parallel geschaltete Leitungen (19, 23), wovon die eine über das Referenzdrucksystem (23a) führt, mit der Prüfkammer (3) verbunden sind.

2. Verfahren nach Anspruch 1 dadurch gekennzeichnet, dass die eine Leitung (23), dem Sensoreingang vorgelagert, von der Prüfkammer abgetrennt wird und im von der Prüfkammer abgetrennten Leitungsstück (23a), als Referenzdrucksystem, der Referenzdruck festgehalten wird.

3. Verfahren nach Anspruch 1 oder 2, dadurch gekennzeichnet, dass der Druck in der Prüfkammer (3) nach einem vorgegebenen Zeitverlauf geregelt wird und eine hierzu gestellte Stellgrösse ($s\frac{\Delta V}{\Delta t}$) gemessen und ausgewertet wird.

4. Verfahren nach einem der Ansprüche 1 bis 3, dadurch gekennzeichnet, dass man die Auswertung zu einem vorgegebenen Zeitpunkt punktuell oder zu zwei oder mehr Zeitpunkten oder kontinuierlich vornimmt.

5. Verfahren nach einem der Ansprüche 1 bis 4, dadurch gekennzeichnet, dass man die gemessene und ausgewertete Grösse mit vorgegebenen, vorzugsweise abgespeicherten (39) SOLL-Werten bzw. SOLL-Verläufen vergleicht und aus dem Vergleichsresultat auf Hohlkörperausschuss schliesst.

6. Anordnung zur Dichteprüfung eines Hohlkörpers mit einer druckbeaufschlagbaren Prüfkammer (3) für den Hohlkörper, einer Referenzdruckkammer (23a) sowie einem Differenzdrucksensor (21), dessen einer Eingang (E19) mit der Prüfkammer (3), dessen anderer Eingan (E23), mit der Referenzdruckkammer (23a) verbunden ist, wobei beide Eingänge des Differenzdrucksensors (21) über parallel geschaltete Verbindungen (19, 23) mit der Prüfkammer (3) verbunden sind und die eine (23) über die Referenzdruckkammer (23a) und ein Absperrglied (25) führt.

7. Anordnung nach Anspruch 6, dadurch gekennzeichnet, dass die Referenzdruckkammer ein Verbindungsleitungsstück (23a) zwischen einem Sensoreingang ($E_{23}$) und dem Absperrglied (25) ist.

8. Anordnung nach Anspruch 6 oder 7, dadurch gekennzeichnet, dass eine Steuereinheit (41) vorgesehen ist, die nach Erreichen eines vorgegebenen Druckes in der Prüfkammer (3) das Absperrglied (25) sperrt, zur Speicherung des dann vorherrschenden Kammerdruckes als Referenzdruck in der Referenzdruckkammer (23a).

9. Anordnung nach einem der Ansprüche 6 bis 8, dadurch gekennzeichnet, dass der Sensor (11) als Regelgrössenmessglied in einen Regelkreis für den Druck in der Prüfkammer geschaltet ist und das Stellsignal ($s\frac{\Delta V}{\Delta t}$) des Regelkreises ausgewertet ist.

10. Anordnung nach einem der Ansprüche 6 bis 9, dadurch gekennzeichnet, dass Druckerzeugungsorgane (7a) für die Prüfkammer (3) über mindestens ein Absperrglied (27) mit einer Vorkammer (29) verbunden sind, welch letztere über ein weiteres Absperrglied (31) mit der Prüfkammer (3) verbunden ist.

11. Anordnung nach einem der Ansprüche 6 bis 10, dadurch gekennzeichnet, dass Speichermittel (39) für Daten, die mindestens einem SOLL-Wert oder mindestens einem SOLL-Verlauf des ausgewerteten Signals entsprechen, vorgesehen sind und dass das ausgewertete Signal einerseits, die Speichermittel (39) anderseits auf eine Vergleicheranordnung (37) geführt sind.

12. Verwendung des Verfahrens nach einem der Ansprüche 1 bis 5 bzw. der Anordnung nach einem der Ansprüche 6 bis 11 zur Dichteprüfung flexibler Hohlkörper, wie von Kaffeeverpackungen.

13. Verwendung des Verfahrens nach einem der Ansprüche 1 bis 5 bzw. der Anordnung nach einem der Ansprüche 6 bis 11 für mindestens teilweise schon mit ihrem Füllgut gefüllte Hohlkörper.

**Claims**

1. Method for testing tightness, in which a hollow body (1) is exposed to a pressure difference in a test chamber (3) and is measured and evaluated by means of a differential pressure sensor (21) between a reference pressure system (23a) and the test chamber (3), the reference pressure system (23a) at first being connected to the test chamber (3) and then being disconnected therefrom in order to maintain an instantaneous pressure as the reference pressure, and the two inputs ($E_{23}$, $E_{19}$) of the differential pressure sensor (21) being connected to the test chamber (3) by means of lines (19, 23) connected in parallel, one of which leads via the reference pressure system (23a).

2. Method according to claim 1, characterised in that one line (23) extending in front of the sensor input is disconnected from the test chamber and that the reference pressure is maintained as a reference pressure system in the section of line (23a) disconnected from the test chamber.

3. Method according to claim 1 or claim 2, characterised in that the pressure in the test chamber (3) is adjusted according to predetermined time characteristics and a controlled variable $s(\frac{\Delta V}{\Delta t})$ set to this end is measured and evaluated.

4. Method according to one of claims 1 to 3, characterised in that the evaluation is effected punctually at a predetermined point of time or at two or more points of time or continuously.

5. Method according to one of claims 1 to 4, characterised in that the measured and evaluated magnitudes are compared with predetermined, preferably stored (39) desired values or desired characteristics and, from the results of the comparison, conclusions are drawn about whether to reject the hollow body.

6. Device for testing the tightness of a hollow body having a test chamber (3) for the hollow body to which pressure can be applied, a reference pressure chamber (23a) and a differential pressure sensor (21), one input ($E_{19}$) of which is connected to the test chamber (3) and the other input ($E_{23}$) of which is connected to the reference pressure chamber (23a), the two inputs of the differential pressure sensor (21) being connected via paralleled connections (19, 23) to the test chamber (3) and one (23) of which leads via the reference pressure chamber (23a) and a shut-off device (25).

7. Device according to claim 6, characterised in that the reference pressure chamber is a piece of connecting line (23a) between a sensor input ($E_{23}$) and the shut-off device (25).

8. Device according to claim 6 or claim 7, characterised in that a control unit (41) is provided which closes the shutoff device (25) once a predetermined pressure has been reached in the test chamber (3) in order to store the then prevailing chamber pressure as the reference pressure in the reference pressure chamber (23a).

9. Device according to one of claims 6 to 8, characterised in that the sensor (11) is connected as a controlled variable measuring element in a control system for the pressure in the test chamber and the corrective signal $s(\frac{\Delta V}{\Delta t})$ of the control system is evaluated.

10. Device according to one of claims 6 to 9, characterised in that pressure means (7a) for the test chamber (3) are connected via at least one shut-off device (27) to a prechamber (29), the latter being connected via a further shut-off device (31) to the test chamber (3).

11. Device according to one of claims 6 to 10, characterised in that storage means (39) for data corresponding to at least one desired value or at least one desired characteristic of the evaluated signal are provided and that the evaluated signal, on the one hand, and the storage means (39), on the other hand, are connected to a comparator device (37).

12. Utilisation of the method according to one of claims 1 to 5 or of the device according to one of claims 6 to 11 for testing the tightness of flexible hollow bodies such as coffee packages.

13. Utilisation of the method according to one of claims 1 to 5 or of the device according to one of claims 6 to 11 for hollow bodies already at least partially filled with their filling material.

## Revendications

1. Procédé pour le contrôle d'étanchéité, selon lequel un corps creux (1) est soumis, dans une chambre de contrôle (3), à une différence de pression, et une différence de pression entre un système de pression de référence (23a) et la chambre de contrôle (3) est mesurée et évaluée à l'aide d'un détecteur de pression différentielle (21), le système de pression de référence (23a) étant tout d'abord relié à la chambre de contrôle (3), avant d'être séparé de celle-ci, pour maintenir une pression momentanée comme pression de référence, et les deux entrées ($E_{23}$, $E_{19}$) du détecteur de pression différentielle (21) étant reliées à la chambre de contrôle (3) par l'intermédiaire de conduites (19, 23), montées en parallèle, dont l'une passe par le système de pression de référence (23a).

2. Procédé selon la revendication 1, caractérisé en ce que l'une (23) des conduites, montée en amont de l'entrée du détecteur, est séparée de la chambre de contrôle et la pression de référence est maintenue dans la partie de conduite (23a) séparée de la chambre de contrôle et servant de système de pression de référence.

3. Procédé selon la revendication 1 ou 2, caractérisé en ce que la pression régnant dans la chambre de contrôle (3) est réglée suivant une courbe dans le temps prédéfinie et une grandeur de réglage (s $\frac{\Delta v}{\Delta t}$ ) réglée à cet effet est mesurée et évaluée.

4. Procédé selon l'une des revendications 1 à 3, caractérisé en ce que l'on procède à l'évaluation ponctuellement, à un moment prédéfini, ou à deux moments ou plus, ou en continu.

5. Procédé selon l'une des revendications 1 à 4, caractérisé en ce que l'on compare la grandeur mesurée et évaluée à des valeurs théoriques ou à des courbes théoriques prédéfinies, de préférence mises en mémoire (39), et que l'on déduit du résultat de la comparaison si le corps creux est une pièce manquée.

6. Dispositif pour le contrôle d'étanchéité d'un corps creux, comportant une chambre de contrôle (3), apte à être soumise à une contrainte de pression, pour le corps creux, une chambre de pression de référence (23a) et un détecteur de pression différentielle (21) dont une première entrée ($E_{19}$) est reliée à la chambre de contrôle (3) tandis que la seconde entrée ($E_{19}$) est reliée à la chambre de pression de référence (23a), les deux entrées du détecteur de pression différentielle (21) étant reliées à la chambre de contrôle (3) par des raccordements (19, 23) montés en parallèles et l'un (23) de ces raccordements passant par la chambre de pression de référence (23a) et par un organe d'arrêt (25).

7. Dispositif selon la revendication 6, caractérisé en ce que la chambre de pression de référence consiste en une partie de conduite de raccordement (23a) située entre une entrée ($E_{23}$) du détecteur et l'organe d'arrêt (25).

8. Dispositif selon la revendication 6 ou 7, caractérisé en ce qu'il est prévu une unité de commande (41) qui, une fois qu'une pression prédéfinie est atteinte dans la chambre de contrôle (3), bloque l'organe d'arrêt (25) pour mettre en mémoire, comme pression de référence dans la chambre de pression de référence (23a), la pression prédominante régnant alors dans la chambre.

9. Dispositif selon l'une des revendications 6 à 8, caractérisé en ce que le détecteur (11) est monté, comme organe de mesure de grandeur de réglage, dans un circuit régulateur pour la pression régnant dans la chambre de pression, et le signal de réglage ($s\frac{\Delta v}{\Delta t}$ ) dudit circuit régulateur est évalué.

10. Dispositif selon l'une des revendications 6 à 9, caractérisé en ce que des organes générateurs de pression (7a) pour la chambre de contrôle (3) sont reliés par l' intermédiaire d'un ou plusieurs organes d'arrêt (27) à une première chambre (29) qui est elle-même reliée à la chambre de contrôle (3) par l'intermédiaire d'un second organe d'arrêt (31).

11. Dispositif selon l'une des revendications 6 à 10, caractérisé en ce qu'il est prévu des moyens de mise en mémoire (39) pour des données qui correspondant à une ou plusieurs valeurs théoriques ou à une ou plusieurs courbes théoriques du signal évalué, et en ce que le signal évalué, d'un côté, et les moyens de mise en mémoire (39), de l'autre côté, sont amenés vers un dispositif comparateur (37).

12. Utilisation du procédé selon l'une des revendications 1 à 5, respectivement du dispositif selon l'une des revendications 6 à 11 pour le contrôle d'étanchéité de corps creux flexibles tels que des emballages de café.

13. Utilisation du procédé selon l'une des revendications 1 à 5, respectivement du dispositif selon l'une des revendications 6 à 11 pour des corps creux déjà au moins partiellement remplis de leur contenu.

FIG.1

FIG.3

FIG. 2a

FIG. 2b

FIG.4

FIG.5